# EUROPEAN PATENT SPECIFICATION

(11) **EP 1 058 601 B1**
(45) Date of publication and mention of the grant of the patent: **10.09.2003**
(21) Application number: 99901535.7
(22) Date of filing: 21.01.1999
(51) Int. Cl.: B25H 1/20, B25H 1/16, B25H 1/00, A61C 19/00, A61C 13/12, B08B 15/04

(54) **AN ERGONOMIC HAND SUPPORT FOR PRECISION WORK**
ERGONOMISCHE HANDAUFLAGE FÜR PRÄZISIONSARBEITEN
APPUI-MAIN ERGONOMIQUE POUR TRAVAUX DE PRECISION

(30) Priority: 22.01.1998 CA 2221584
(43) Date of publication of application: 13.12.2000
(73) Proprietor: Habisreitinger, Walter, Montréal, Quebec H2T 1A6 (CA)
(72) Inventor: Habisreitinger, Walter, Montréal, Quebec H2T 1A6 (CA)
(74) Representative: Jacobson, Claude
(86) International application number: CA9900046
(87) International publication number: WO99037448

(56) References cited:
- DE-A- 3 328 875
- DE-A- 4 415 835
- DE-U- 9 405 213
- DE-U- 9 412 802
- DE-U- 29 502 862
- US-A- 4 184 251

## Description

### FIELD OF THE INVENTION

The present invention relates to an ergonomic hand support for precision work on a piece. The support can be useful in many fields, such as in the dental laboratory and jewellery industry. More particularly, the ergonomic hand support provides at least one hand part support for supporting a part of a user's hand, such as prominent parts of the hand palm, and a working surface wherein both the hand part support and the working surface are vertically adjustable in such a way that the user may assume a comfortable, relaxed and ergonomic posture when doing precision work using the ergonomic hand support of the present invention.

### BACKGROUND

In a dental laboratory, making porcelain teeth, dentures and all kinds of dental prosthesis is a precision work that requires a specialized working surface. Such precision work includes milling, grinding and polishing. The specialized working surface that is commonly used in dental laboratories is a block frequently made of wood, which is installed on the side of a workbench by means of a pin inserted in the side of the workbench that has a fastener adapted to receive the pin. Such a block is called a bench pin by the manufacturer. The bench pin can be used in combination with a vacuum system having an inlet mouth adapted to be mounted onto the workbench on a side of the bench pin. Such a workbench, bench pin and vacuum system are commercialised by many manufacturers such as KaVo EWL (Leutkirch, Germany), Microstar Corporation (Atlanta, Georgia) and Zhan Dental Company Inc. (Melville, New York).

One of the major drawbacks of the above-described equipment is that the level of the bench pin may be too low and consequently, the user needs to bend his back and/or his neck to focus correctly on the piece that he is working on. Therefore, the user's posture results in backaches, and makes the dental technician's job difficult, and even impossible for people who are tall.

In the jewellery industry, an equipment very similar to the bench pin described above is used, and sold by Grobet USA ™ for example. There is also a need for an apparatus to do the precision work while assuming a more comfortable, relaxed and ergonomic posture.

There is some apparatuses disclosed in DE-A-3,328,875, DE-U-29,502,862 and DE-A-4,415,835 for use in dental laboratory, that represent an improvement over the above described bench pin. However, they do not fully satisfy the actual need of having a real ergonomic apparatus.

The apparatus disclosed in DE-A-3,328,875 has a working block fixed on the top of an upwardly extending bar which is pivotally mounted on a bench. On a portion of the working block, there is a round cushion for depositing a dental prosthesis. This apparatus does not provide a hand part support shaped to support palm prominent parts of a user's hand.

The apparatus disclosed in DE-U-29,502,862 has a working block fixed to a rigid structure that can not be vertically or horizontally adjusted. Neither, this apparatus does not provide a hand part support for supporting palm prominent parts of a user's hand. However, it proposes wide wings extending laterally from the working block for supporting a distal portion of the forearms of the user. Unfortunately, doing a precision work using a handpiece with this apparatus can be limited since the wide wings may obstruct the motion of the handpiece.

Finally, the apparatus disclosed in DE-A-4,415,835 consists of a working block fixed to a proximal end of an horizontal member which has a distal end pivotally mounted on a structure fastened to the bench. The horizontal member can pivot downwardly to lower the working block. This apparatus does not provide any arm support or hand support.

### SUMMARY OF THE INVENTION

An object of the present invention is to provide an ergonomic hand support that overcomes the above-mentioned drawbacks and could be useful in many fields such as in the dental laboratory and jewellery industry

A subsidiary object of the present invention is to provide such a support, with an unobstructive vacuum system.

A further object of the present invention is to provide an ergonomic hand support having a vertically adjustable working surface.

A subsidiary object of the present invention is to provide an ergonomic hand support having a working surface and at least one hand part support that are vertically and horizontally adjustable in order to be pleasing to users of different heights.

In accordance with the present invention, there is provided an ergonomic hand support for precision work on a piece, of the type comprising :
- a head portion having an upper surface, the upper surface including a working surface;
- means for vertically adjusting the head portion to a desired height;
characterized in that:
- the upper surface of the head portion is substantially half-spherical in shape and includes two hand part supports shaped to support palm prominent parts of user's hands, said hand part supports being respectively positioned on two opposite sides of the upper surface and in vicinity to the working surface; and
- container means are provided below at least the working surface for collecting the piece or any tool that could drop off from the working surface.

According to a preferred embodiment of the present invention, the ergonomic hand support further comprises means for horizontally adjusting the head portion to a desired distance from a user's body.

Still according to a preferred embodiment of the present invention, the ergonomic hand support further comprises a vacuum device having a vacuum inlet adjacent to the working surface.

Advantageously, when a user is doing a precision work with the prominent parts of his hand supported by the hand part support of the ergonomic hand support according to the present invention, the finger tips of the user's hand extend over the working surface and are at an appropriate distance from the user's eyes so that the user (i) is able to focus easily on the precision work, and (ii) may work with a comfortable, relaxed and ergonomic posture which minimizes torsion of the backbone. A more relaxed working posture allows the user to better concentrate on his work, and thereby be more efficient and productive.

### BRIEF DESCRIPTION OF THE DRAWINGS

A detailed description of preferred embodiments of the invention will be given hereinbelow with reference to the following drawings, in which same numbers refer to same elements:
- figure 1 is a perspective view of an ergonomic hand support according to the invention provided with a magnifying glass and showing the hands of a user in a working position;
- figure 2 is a perspective view of an ergonomic hand support according to the invention, at a different angle from figure 1;
- figure 3 is an exploded perspective view of an ergonomic hand support according to the invention where the head portion is horizontally adjustable;
- figure 4 is a partial cross-sectional view of an ergonomic hand support according to the invention, showing details of the mechanism for horizontally and vertically adjusting the head portion;
- figure 5 is a side elevation view of an ergonomic hand support according to the invention, provided with a magnifying glass, where the base portion is shown in a cross-section;
- figure 6 is a cross-sectional view of an ergonomic hand support according to the invention, showing two different interchangeable working surfaces;
- figures 7 a) and b) are cross-sectional views of the head portion of the ergonomic hand support according to the invention with one or the other of the working surfaces shown in figure 6, respectively; and
- figures 8 a) and b) are perspective views of two different working surfaces like those shown in figures 6 and 7, respectively.

### DESCRIPTION OF PREFERRED EMBODIMENTS

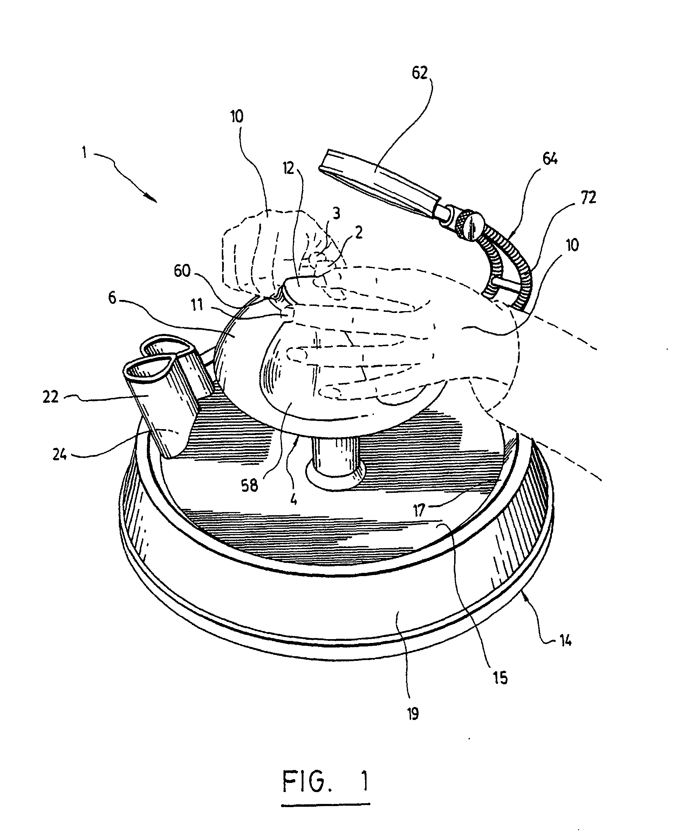

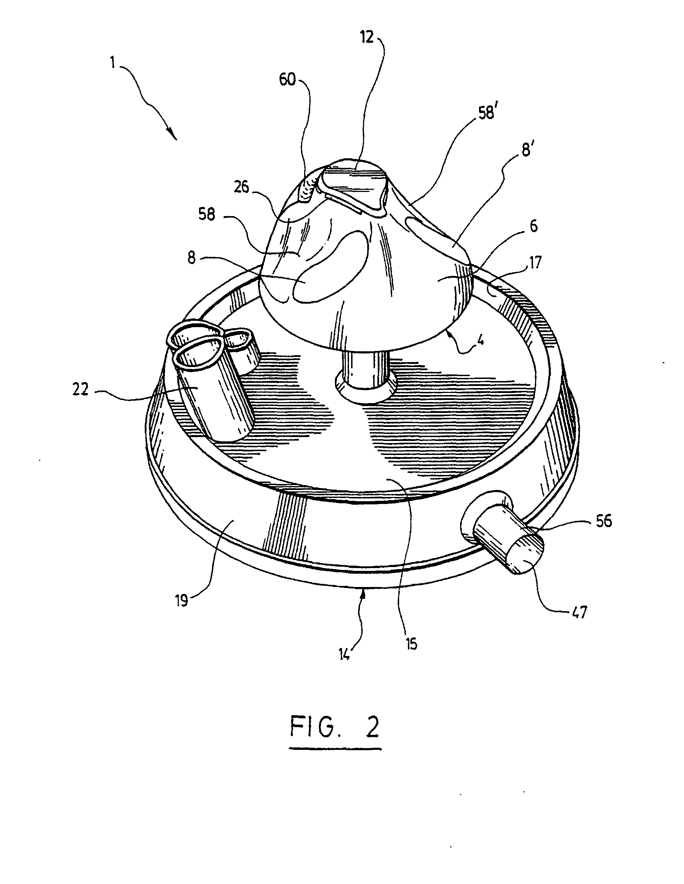

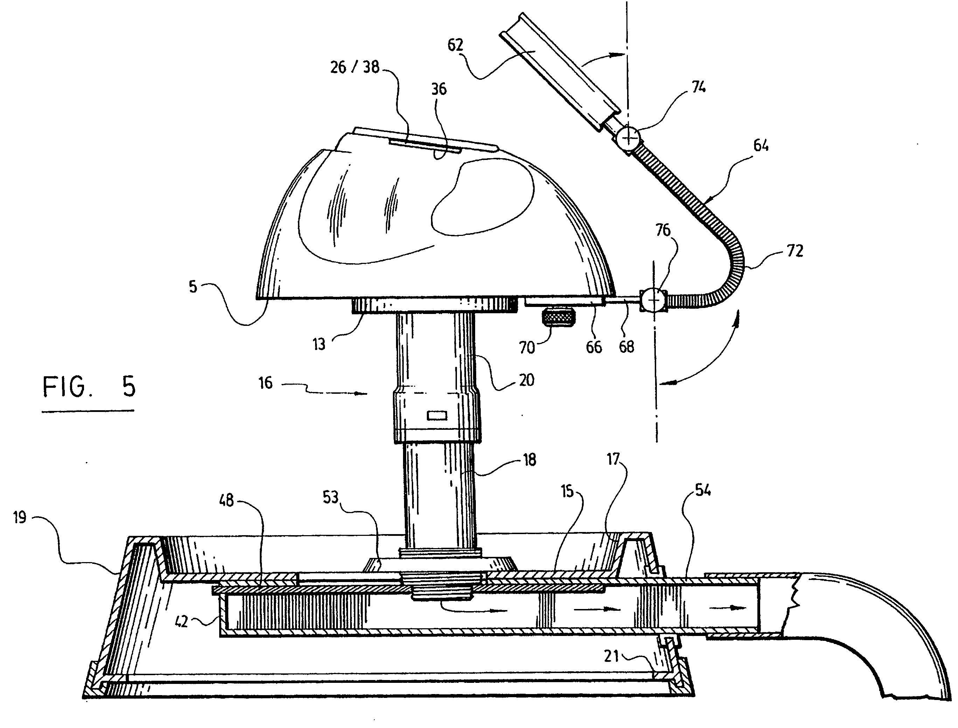

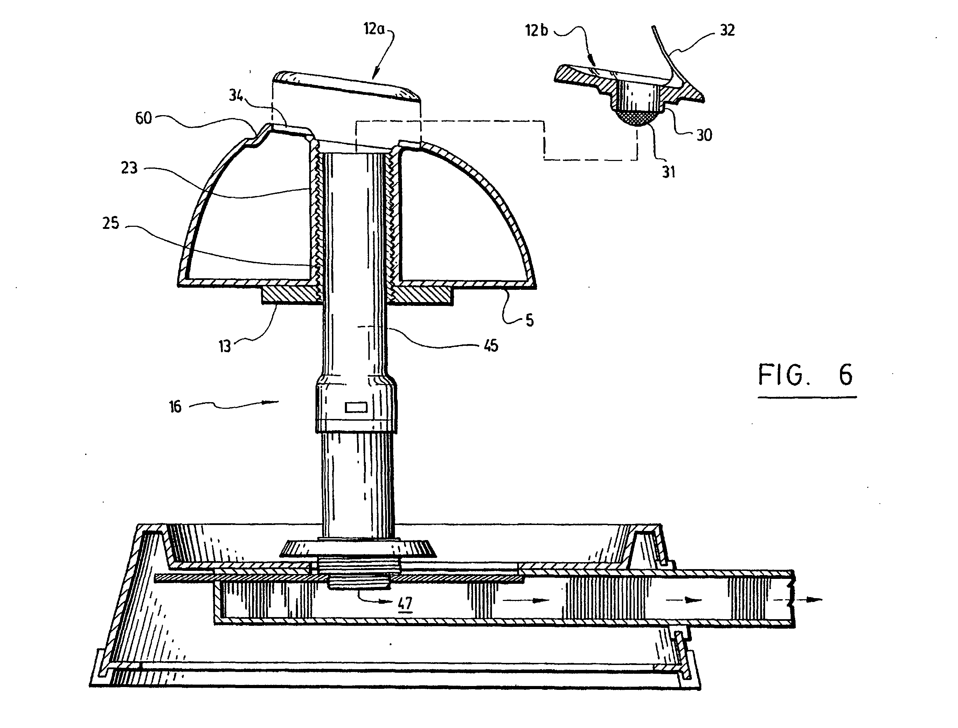

Referring to figures 1 and 2, the ergonomic hand support (1) for precision work on a piece (2) according to the present invention, comprises a head portion (4) having an upper surface (6). According to a preferred embodiment of the invention, the head portion (4) has a hemispheric shape where the flat surface represents a lower surface (5) (shown in figures 5 and 6) and the half-spherical surface forms the upper surface (6). The head portion (4) may assume numerous other forms.

The ergonomic hand support (1) has a hand part support (8) shaped to support a part of a user's hand (10). Advantageously, the part of the user's hand which is supported by the hand part support is the palm prominent parts. It should be understood that the palm prominent parts of a hand comprise the external palm prominent part *(thénar)* commonly known as the ball of the thumb and the internal palm prominent part *(hypothénar)* formed by the three motor muscles of the little finger. The hand part support (8) is positioned on the upper surface (6) of the head portion (4). The hand part support (8) may be provided by a section on the upper surface (6) of the head portion (4) or by an independent part permanently or removably attached to said upper surface (6). Preferably, the hand part support (8) is cushioned for user's comfort.

As it is well illustrated in figures 1 and 2, the ergonomic hand support (1) according to the invention also has a working surface (12) positioned on the upper surface (6) of the head portion (4) in the vicinity of the hand part support (8). Advantageously, the finger tips (11) of the user's hand (10) extend over the working surface (12) when the palm prominent parts of the user's hand (10) are supported by the hand part support (8). The working surface (12) can be used for supporting the piece (2) subjected to the precision work, the user's hand (10), or anything else that might be useful to perform the precision work. It may also stand immediately below the area where the precision work is achieved, if the working surface is not required as such. Preferably, the working surface (12) is removably mounted onto the upper surface (6) of the head portion (4). The advantages of being removably mounted consist principally in having a working surface (12) that is disposable and interchangeable with a different working surface (12) adapted to a particular precision work.

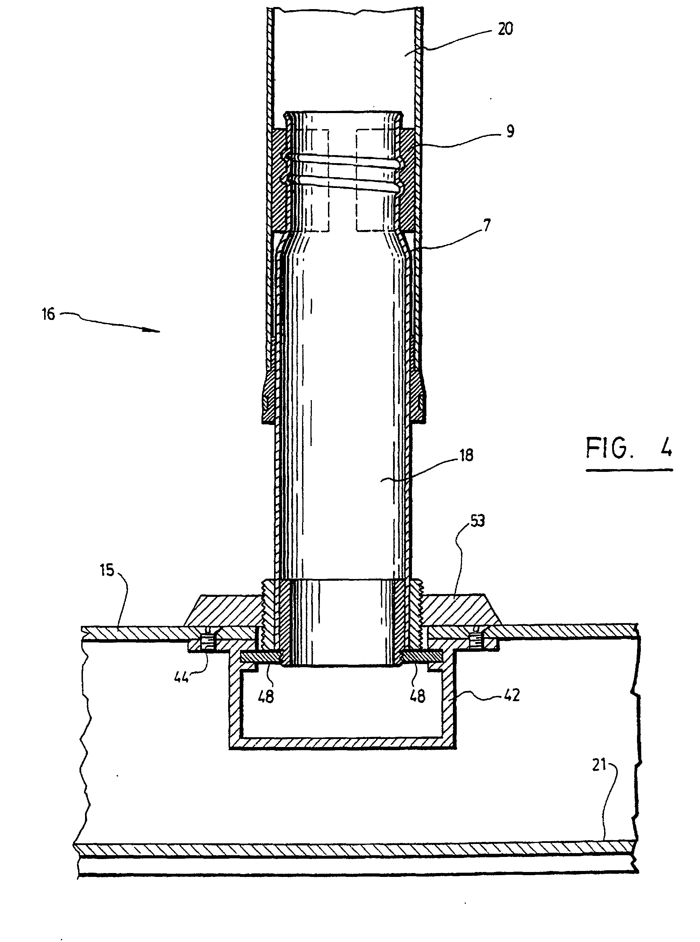

Referring more particularly to figures 4, 5 and 6, the ergonomic hand support (1) is preferably provided with a mechanism or device for vertically adjusting the head portion (4) to a desired height. According to another preferred embodiment of the invention, the ergonomic hand support (1) is provided with a base portion (14) as shown in figures 1, 2 and 3, and the mechanism for vertically adjusting the head portion (4) has a telescopic boom (16) extending vertically between the head portion (4) and the base portion (14), and a locking mechanism for locking the telescopic boom (16) in a desired position corresponding to the desired height of the head portion (4). Although numerous kinds of locking mechanisms can be used alternatively, the preferred one has a ring (9) that screws around a first part (18) of the telescopic boom (16) when it is driven by a second part (20) of the telescopic boom (16) that slides over the first part (18) as best illustrated in figure 4. Once the second part (20) is slided along the first part (18) to a desired position for adjusting the height of the head portion (4), the second part (20) is simply turned relative to the first part (18), thereby screwing the ring (9) around the first part (18) until the ring (9) is squeezed between the second part (20) and a bulge (7) extending around the first part (18) for locking the first and second parts (18, 20) in the desired position that corresponds to the height of the head portion (4).

As an alternate mechanism for vertically adjusting the head portion (4), the second part (20) may be screwed directly onto the first part (18) instead of sliding along it (not shown in the figures). In such a case, a corresponding locking mechanism could consist of a nut that is screwed against the second part (20) to stop it from screwing downwards, thereby locking the second part (20) in a desired position along the first part (18). Other mechanisms can be devised for adjusting vertically the head portion (4). For example, the head portion (4) could be directly connected to a wall and a mechanism on the wall may be used for the vertical adjustment of the head portion (4).

For additional vertical adjustment, the second part (20) and the head portion (4) are screwably assembled as illustrated in figure 6. More particularly, the means for vertically adjusting the head portion (4) further has a vertical threaded hole (23) at the lower surface (5) of the head portion (4) and extending inside the head portion (4), and a threaded upper end (25) of the telescopic boom (16) screwing into the vertical threaded hole (23). The second part (20) provides the threaded upper end (25) of the telescopic boom (16). For examples, the threaded upper end (25) may be provided by a threaded sleeve covering the second part (20) and attached to it, or by threads made on the second part (20), or the like. Preferably, the threaded hole (23) inside the head portion (4) extends along the whole thickness of the head portion (4) and is provided by a threaded nut. Thus, the second part (20) can be screwed partially inside the head portion (4) to raise it. Moreover, this embodiment is also useful as it allows the head portion (4) to be turned in a desired direction. A further advantage of this embodiment consists of removing the head portion (4) from the ergonomic hand support (1) and replacing it by a new head portion (4) or a different head portion (4). A ring (13) is provided for screwing on the second part (20) against the head portion (4) and locking it into a desired position along the second part (20) that corresponds to a certain height and a desired angle with respect to a user's location.

As illustrated in figures 1, 2 an 5, the ergonomic hand support (1) has a container device that extends below at least the working surface (12) for collecting the piece (2) or any tool, such as the hand piece (3) shown in figure 1, that could drop off the working surface (12). Preferably, the base portion (14) has a top surface (15) surrounded by a rim (17). The top surface (15) and rim (17) act as the container device. The base portion (14) also has a side wall (19) downwardly projecting from the rim (17) and a bottom surface (21), shown in figure 4. The base portion (14) has a width which may vary but it is preferably sufficiently large to collect a piece or a tool that falls from the head portion (4). Alternatively, the base portion (14) can be provided by a suitable surface on a desk or a bench onto which the support (1) is mounted. Many other container devices may be designed for satisfying such needs. For example, the container device could be provided with a flange extending from the lower surface of the head portion (4) and projecting substantially horizontally without interfering with the movements of the user's arms and hands (10).

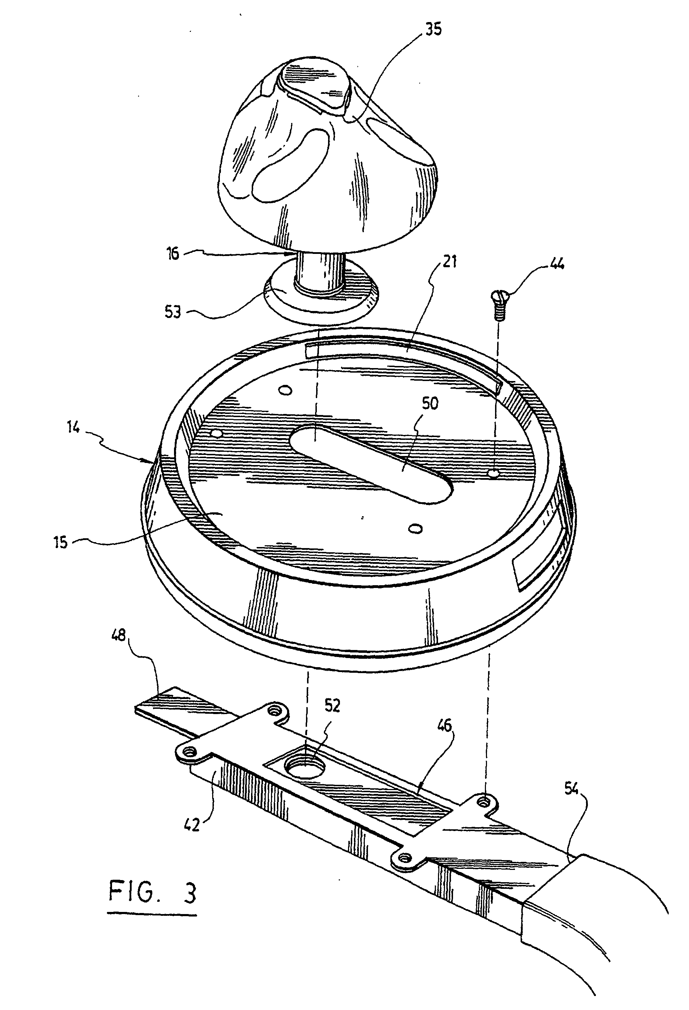

Optionally, the rim (17) of the base portion (14) is provided with a magnetic strip (21) shown in figure 3, used for holding metallic pieces such as a bit of a drill, or the like.

Also optionally, the top surface (15) of the base portion (14) is provided with an upwardly projected tool holding container (22) shown in figure 1, having a bottom end (24) that is left open so that a small piece that fell into the tool holding container (22) can be easily recovered on the top surface (15).

Advantageously, the top surface (15) of the base portion (14) has a non-slip covering material having a predetermined colour contrasting with a colour of the piece (2) on which the precision work is to be done. Also advantageously, the upper surface (6) of the head portion (4) also has a colour contrasting with the colour of the piece (2) on which the precision work is to be done.

According to a preferred embodiment of the invention, the ergonomic hand support (1) is further provided with a vacuum device having a vacuum inlet (26) adjacent to the working surface (12) as shown in figure 2. In a different way to embody the invention, the vacuum inlet (26) can be provided as an independent part of the head portion (4). However, in order to maximise the free space around the head portion (4) where the user's hands and arms can move, the vacuum inlet (26) is preferably incorporated into the head portion (4) as best illustrated in figure 2.

Multiple tools can be used for working on the ergonomic hand support (1), and depending on the kind of work to be done and the kind of tools that are used, different working surfaces (12) may be used alternatively. Many types of working surfaces (12) can be devised and used with the ergonomic hand support (1) in accordance with the present invention. Two different typical working surfaces (12) are shown in figures 6, 7 and 8. A first embodiment of the working surface (12a) consists of a flat piece of wood preferably having a pear-like shape. The use of wood as the material of which the working surface (12a) is made of, is particularly advantageous when working with a milling handpiece, because it reduces or eliminates the risk of damaging the milling bit if it hits the working surface (12a).

The working surface (12) may exhibit various shapes. Advantageously, the shape of the working surface (12) should be designed so as to be practical and unobstructive during the movement of the user's hands (10), the manipulation of the piece (2) on which the precision work is done or a handpiece (3) (as shown in figure 1) used to do the precision work, or the like. Preferably, all different working surfaces (12) have substantially the same shape so that they may be alternatively and removably mounted onto the same head portion (4) as illustrated in figure 6.

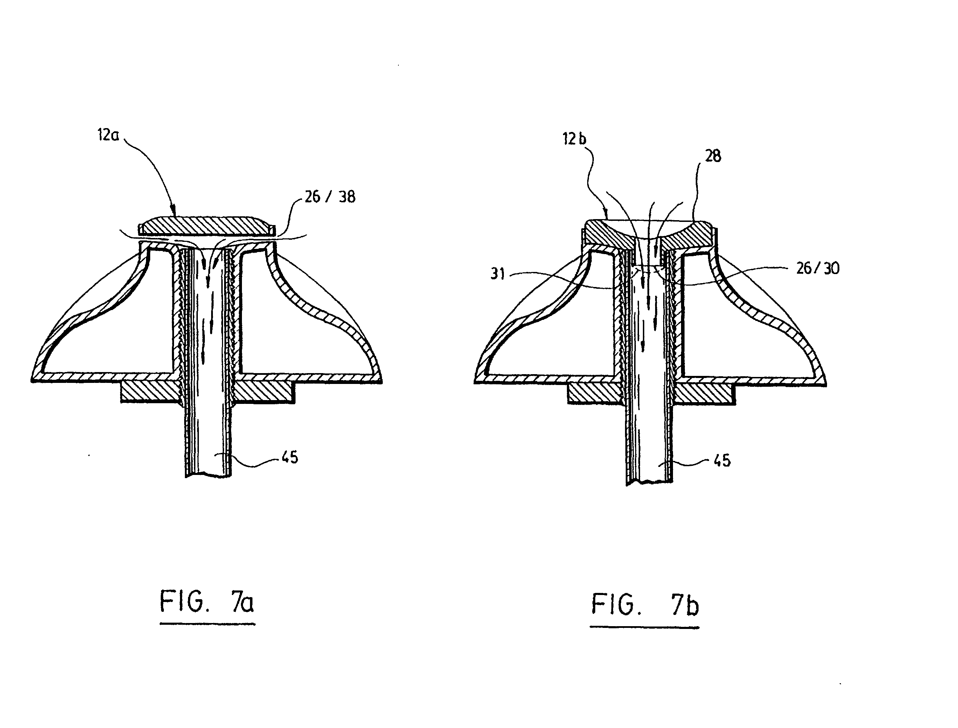

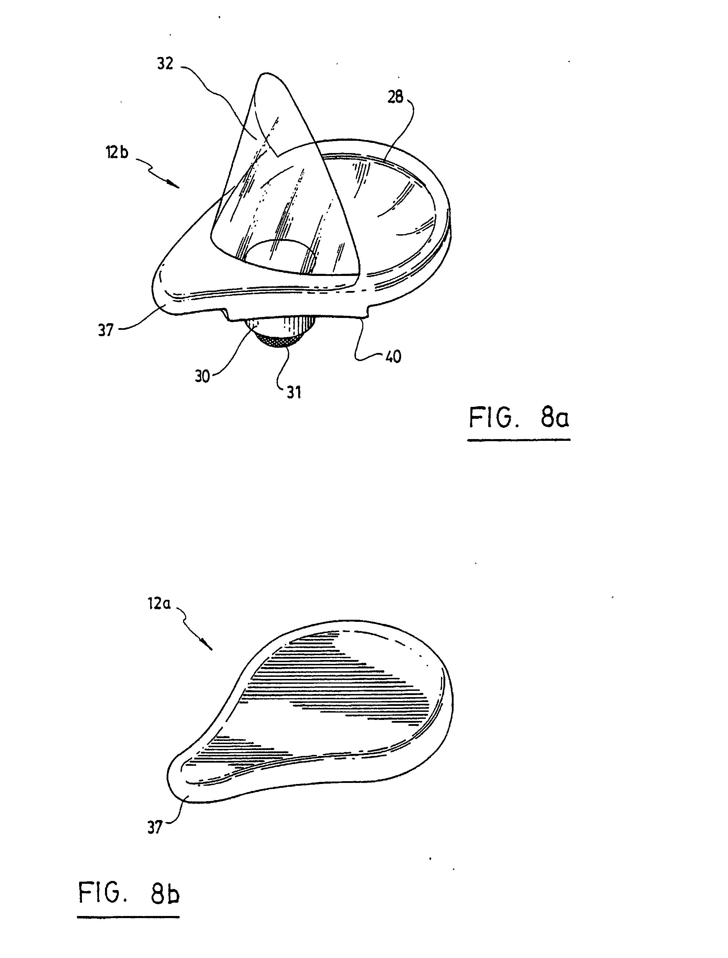

A second embodiment of the working surface (12b) is shaped like a funnel of a given size. The funnel has a large opening (28) that is opposite to the base portion (14), and a small opening (30) that acts as the vacuum inlet (26) of the vacuum system as shown more particularly in figure 7. The small opening (30) is covered by a screen (31) for collecting any small piece that fell in the funnel while permitting dust and liquids to go through the screen (31). A vertically projecting shield (32) is provided on the working surface (12b). The shield (32) surrounds at least one part of the large opening (28) of the funnel as illustrated in figure 8. The second working surface (12b) is especially useful for working with a handpiece that uses a jet of water. In such a case, water splashes are prevented by the shield (32) and the water is drained by the funnel to the vacuum inlet (26) therein provided by the small opening (30).

Preferably, the working surface (12) is mounted on the upper surface (6) of the head portion (4) by fitting tightly into a recess (34) provided on the upper surface (6) for recessing the working surface (12). More particularly, the working surface (12) is mounted by engaging the sharp tip (37) (shown in figures 8a and 8b) of the pear shaped working surface (12) in its corresponding location (35) (shown in figure 3) in the recess (34) which is slightly more deep-set than the rest of the recess (34), and then, pressing down the whole working surface (12) and setting it in the recess (34) where it fits tightly and is held by the upper surface (6) of the head portion (4).

The recess (34) has a shape which is substantially complementary to the predetermined shape of the first working surface (12a) and entirely complementary to the predetermined shape of the second working surface (12b). The recess (34) has at least one lateral notch (36) which, when the first working surface (12a) is fitted into the recess (34), defines a slot (38) adjacent to the working surface. The slot (38) acts as the vacuum inlet (26). The notch (36) is shown in figure 5, and the slot (38) is shown in figures 5 and 7. The second working surface (12b) has a slim edging (40) shown in figure 8, that fits perfectly in the notch (36) for filling up the slot (38) and therefore, ensuring that the vacuum inlet (26) is provided only by the small opening (30) of the funnel of the second working surface (12b) to maintain a vacuum force at the small opening (30).

According to a preferred embodiment of the invention, the ergonomic hand support (1) may also be provided with a mechanism for horizontally adjusting the head portion (4) to a desired distance from a user's body. Such a mechanism is particularly useful to please different users, and is particularly desirable for an ergonomic hand support (1) having a wide base portion (14).

As illustrated in figure 3, the mechanism for horizontally adjusting the head portion (4) preferably consists of an elongated channel (42) connected to the base portion (14) by means of bolts (44) or other fastenings. The channel (42) could also be permanently secured to the base portion (14) by welding or other techniques. However, an advantage of being removably connected to the base portion (14) consists principally of replacing the channel (42) if it looses its airtightness. The channel (42) has an upper opening (46), and a sliding member (48) which is slidably mounted in the opening (46) of the channel (42). The sliding member (48) is connected to the telescopic boom (16). More precisely, the telescopic boom (16) passes through an aperture (50) in the top surface (15) of the base portion (14) and screws in a threaded hole (52) in the sliding member (48). The channel (42) also has a locking mechanism for locking the sliding member (48) into a desired position along the channel (42). The locking mechanism has a ring (53) that screws around the first part (18) of the telescopic boom (16) for fastening the top surface (15) against the channel (42). It should be noted that the sliding member (48) has a certain length that is sufficiently long for covering the opening (46) of the channel (42) independently of the position of the telescopic boom (16) along the channel (42). Since the sliding member (48) is relatively long, it may extend out of the channel (42) by an airtight slot as shown in figure 3. As can be observed in figures 5 and 6, the telescopic boom (16) may take respectively a front position and a rear position with respect to the opening (46) of the channel (42). As a result, the base portion (14) is necessarily wide enough to contain the channel (42) and the sliding member (48) in any position without interfering with it.

Referring now to figure 6, the telescopic boom (16) defines a first conduit (45) which communicates with the vacuum inlet (26). In figure 7, the communication of the first conduit (45) with the vacuum inlet (26) is illustrated according to the embodiment of the working surface (12) mounted on the head portion (4) where the arrows indicate the air flow drawn in by the vacuum device. The elongated channel (42) mounted on the base portion (14) defines a second conduit (47) having an end (hereinabove referred to as the hole (52) in the sliding member (48)) connected to the telescopic boom (16) so that the second conduit (47) communicates with the first conduit (45), and an opposite end (54) extends outside the base portion (14) for connection to the vacuum device (not shown in the figures). The ergonomic hand support (1) illustrated in figure 2, is devoid of a mechanism for horizontally adjusting the head portion (4), but it has a tubular member which defines a second conduit (47) in the same way that the channel (42) does. The tubular member defining the second conduit (47) has one end (56) for connection to the vacuum device and the other end (not shown) in communication with the first conduit (45) defined by the telescopic boom (16).

Preferably, the head portion (4) of the ergonomic hand support (1) has a recessed area (58) in the vicinity of the hand part support (8) and the working surface (12). The recessed area (58) is designed to provide a free space for the user's fingers or a manual tool.

Also preferably, the head portion (4) has right and left hemispheres, and the ergonomic hand support (1) is provided with another hand part support (8') shaped to support a part of another user's hand. The part of another user's hand is preferably palm prominent parts. The hand part supports (8 and 8') are preferably mirror images of each other. The other hand part support (8') is positioned on the upper surface (6) of the head portion (4) and is complementary to the hand part support (8). The hand part support (8) and the other hand part support (8') extend respectively on one of the hemispheres.

Still preferably, the head portion (4) has another recessed area (58') in the vicinity of the other hand part support (8') and the working surface (12).

Referring more particularly to figures 2 and 6, the head portion (4) also has a finger gripping structure (60) partially extending along the working surface (12). Preferably, the finger gripping structure (60) extends behind the working surface (12) if the hand part support (8) and/or the other hand part support (8') extend in front of the working surface (12). The finger gripping structure (60). may be used by the user's finger tips (11) for gripping as well as for resting purposes.

Referring more particularly to figures 1 and 5, the ergonomic hand support (1) further comprises a removable magnifying glass (62), an adjustable handle (64) for holding the magnifying glass (62) between the piece (2) and the user's eyes, and a mechanism for removably attaching the handle (64) to the ergonomic hand support (1). The magnifying glass (62) may also be used as an eye protection glass. Alternatively, a glass without magnifying force may replace the magnifying glass (62) to provide an eye protection glass. The mechanism for removably attaching the handle (64) to the ergonomic hand support (1) has a fastening device extending on the lower surface (5) of the head portion (4). Preferably, the fastening device consists of a rail (66) in which a sliding end (68) of the handle (64) is inserted and is locked therein with a screw (70). The handle (64) advantageously has a double goose neck part (72) that can be twisted for fine adjustments of the position and the angle of the magnifying glass (62) with respect to the user's eyes. The double goose neck part (72) is best shown on the perspective view of figure 1. As shown in figure 5, the handle (64) also has a first hinge (74) between the magnifying glass (62) and the goose neck part (72), and a second hinge (76) between the goose neck part (72) and the sliding end (68). Each of the hinges (74, 76) has a locking device for locking the corresponding hinge (74 or 76) in a desired position. When the screw (70) is loosened, the magnifying glass (62) and its handle (64) may be removed. Also, the magnifying glass (62) may be positioned out of the user's sight by loosening the hinge (76) and flipping down the handle (64) together with the magnifying glass (62). The hinge (74) is preferably used for coarse adjustments of the angle of the magnifying glass (62).

The ergonomic hand support (1) of the present invention overcomes physiological problems that people encounter when using the prior art apparatus, since it allows height adjustment of the working surface (12). Advantageously, when a user of the ergonomic hand support (1) is doing a precision work and has the palm prominent parts of his hand (10) supported by the hand part support (8), the finger tips (11) of the user's hand (10) are at an appropriate distance from of the user's eyes so that the user is able to focus easily on the precision work and may work while assuming a comfortable, relaxed and ergonomic posture which minimizes torsion of the backbone. A user may lean his elbows on a workbench on which the ergonomic hand support (1) is placed and have the palm prominent parts of his hands (10) supported by the hand part supports (8, 8') of the ergonomic hand support (1). Such a posture by the user allows his arms, shoulders and neck to be relaxed while working, and gives the user a better concentration on his work in order to be more efficient and productive.

While embodiments of this invention have been illustrated in the accompanying drawings and described in detail herein above, it will be evident to those skilled in the art that changes and modifications may be made therein, the scope of protection being as defined by the claims appended hereto.

## Claims

1. An ergonomic hand support (1) for precision work on a piece (2), of the type comprising :
- a head portion (4) having an upper surface (6), the upper surface (6) including a working surface (12);
- means for vertically adjusting the head portion (4) to a desired height;
**characterized in that**:
- the upper surface (6) of the head portion (4) is substantially half-spherical in shape and includes two hand part supports (8 and 8') shaped to support palm prominent parts of user's hands, said hand part supports (8 and 8') being respectively positioned on two opposite sides of the upper surface (6) and in vicinity to the working surface (12); and
- container means are provided below at least the working surface (12) for collecting the piece (2) or any tool that could drop off from the working surface (12).

2. An ergonomic hand support (1) as claimed in claim 1, **characterized in that** it further comprises a base portion (14) and **in that** the means for vertically adjusting the head portion (4) comprise:
- a telescopic boom (16) extending vertically between the head portion (4) and the base portion (14); and
- a locking means for locking said telescopic boom (16) in a desired position corresponding to the desired height of the head portion (4).

3. An ergonomic hand support (1) as claimed in claim 2, **characterized in that** the head portion (4) has a lower surface (5), and **in that** the means for vertically adjusting the head portion (4) further comprise:
- a vertical threaded hole (23) at the lower surface (5) of the head portion (4) and extending inside the head portion (4); and
- a threaded upper end (25) of the telescopic boom (16) screwing into the vertical threaded hole (23).

4. An ergonomic hand support (1) as claimed in claim 2 or 3, **characterized in that** it further comprises means for horizontally adjusting the head portion (4) to a desired distance from a user's body.

5. The ergonomic hand support (1) as claimed in claim 4, **characterized in that** the means for horizontally adjusting the head portion (4) comprise:
- an elongated channel (42) connected to the base portion (14), the channel (42) having an upper opening (46);
- a sliding member (48) slidably mounted in the opening (46) of the channel (42), the sliding member (48) being connected to the telescopic boom (16); and
- a locking means for locking said sliding member (48) in a desired position along said channel (42).

6. An ergonomic hand support (1) as claimed in any one of claims 2 to 5, **characterized in that** the base portion (14) has a top surface (15) surrounded by a rim (17) and wherein said top surface (15) and rim (17) act as said container means.

7. An ergonomic hand support (1) as claimed in claim 6, **characterized in that** the rim (17) of the base portion (14) comprises a magnetic strip (21).

8. An ergonomic hand support (1) as claimed in claim 6 or 7,
**characterized in that** the top surface (15) of the base portion (14) is provided with an upwardly projected tool holding container (22) having a bottom end (24) that is left open.

9. An ergonomic hand support (1) as claimed in any one of claims 1 to 8, **characterized in that** it further comprises a vacuum device having a vacuum inlet (26) adjacent to the working surface (12).

10. An ergonomic hand support (1) as claimed in claim 5, **characterized in that** it further comprises a vacuum device having a vacuum inlet (26) adjacent to the working surface (12), and **in that**:
- the telescopic boom (16) defines a first conduit (45) which communicates with the vacuum inlet (26); and
- the elongated channel (42) mounted on the base portion (14) defines a second conduit (47) having an end (52) connected to the telescopic boom (16) so that the second conduit (47) communicates with the first conduit (45), and an opposite end (54) extending outside the base portion (14) for connection to the vacuum device.

11. An ergonomic hand support (1) as claimed in claim 10,
**characterized in that**:
- the working surface (12a) is flat, made of wood and of a predetermined shape;
- said. working surface (12a) is removably mounted onto the upper surface (6) of the head portion (4);
- the upper surface (6) of the head portion (4) is provided with a recess (34) for recessing said working surface (12a), said recess (34) having a shape substantially complementary to the predetermined shape of the working surface (12a) so that said working surface (12a) may fit tightly in said recess (34); and
- said recess (34) comprises at least one lateral notch (36) which, when the working surface (12a) is fitted into the recess (34), defines a slot (38) adjacent to said working surface (12), said slot (38) acting as said vacuum inlet (26).

12. An ergonomic hand support (1) as claimed in claim 10, **characterized in that**:
- the working surface (12b) is shaped as a funnel, said funnel having a large opening (28) that is opposite to the base portion (14), and a small opening (30) that acts as said vacuum inlet (26);
- a vertically projecting shield (32) is provided on the working surface (12b), said shield (32) surrounding at least one part of the large opening (28) of the funnel;
- said working surface (12b) is removably mounted onto the upper surface (6) of the head portion (4); and
- the upper surface (6) of the head portion (4) is provided with a recess (34) having a shape entirely complementary to the predetermined shape of the working surface (12b) so that said working surface (12b) may fit tightly in said recess (34).

13. An ergonomic hand support (1) as claimed in any one of claims 1 to 12, **characterized in that** the head portion (4) further comprises two recessed areas (58 and 58'), each recessed area (58 or 58') being respectively in the vicinity of a corresponding hand part support (8 or 8') and the working surface (12).

14. An ergonomic hand support (1) as claimed in any one of claims 1 to 13, **characterized in that** the head portion (4) further comprises a finger gripping structure (60) partially extending along the working surface (12).

15. An ergonomic hand support (1) as claimed in any one of claims 1 to 14, **characterized in that** it further comprises:
- a removable magnifying glass (62);
- an adjustable handle (64) for holding said magnifying glass (62) between the piece (2) on which the precision work is to be done and an user's eye; and
- means for removably attaching said handle (64) to said ergonomic hand support (1).

16. An ergonomic hand support (1) as claimed in any one of claims 1 to 15, **characterized in that** it further comprises:
- a removable eye protection glass (62);
- an adjustable handle (64) for holding said eye protection glass (62) between the piece (2) on which the precision work is to be done and an user's eye; and
- means for removably attaching said handle (64) to said ergonomic hand support (1).

17. An ergonomic hand support (1) as claimed in claims 6, 7 or 8, **characterized in that** the top surface (15) of the base portion (14) comprises a non-slip covering material having a predetermined colour contrasting with a colour of the piece (2) on which the precision work is to be done, and wherein the upper surface (6) of the head portion (4) also has a colour contrasting with the colour of the piece (2) on which the precision work is to be done.

## Patentansprüche

1. Ergonomische Handauflage (1) für Präzisionsarbeiten an einem Stück (2), wobei die Auflage von dem Typ ist, der umfaßt:
- einen Kopfabschnitt (4) mit einer oberen Oberfläche (6), die eine Arbeitsoberfläche (12) enthält;
- Mittel zum vertikalen Einstellen des Kopfabschnitts (4) auf eine gewünschte Höhe;
**dadurch gekennzeichnet, daß**:
- die obere Oberfläche (6) des Kopfabschnitts (4) im wesentlichen halbkugelförmig ist und zwei Handabschnittauflagen (8 und 8') enthält, die so geformt sind, daß sie vorstehende Handballenabschnitte der Hände des Benutzers unterstützen, wobei die Handabschnittauflagen (8 und 8') auf zwei gegenüberliegenden Seiten der oberen Oberfläche (6) bzw. in der Nähe der Arbeitsoberfläche (12) angeordnet sind; und
- Behältermittel wenigstens unter der Arbeitsoberfläche (12) vorgesehen sind, um das Stück (2) oder irgendein Werkzeug, das von der Arbeitsoberfläche (12) herabfallen könnte, aufzufangen.

2. Ergonomische Handauflage (1) nach Anspruch 1, **dadurch gekennzeichnet, daß** sie ferner einen Basisabschnitt (14) umfaßt und daß die Mittel zum vertikalen Einstellen des Kopfabschnitts (4) umfassen:
- einen Teleskopausleger (16), der sich vertikal zwischen dem Kopfabschnitt (4) und dem Basisabschnitt (14) erstreckt; und
- ein Verriegelungsmittel zum Verriegeln des Teleskopauslegers (16) an einer gewünschten Position, die der gewünschten Höhe des Kopfabschnitts (4) entspricht.

3. Ergonomische Handauflage (1) nach Anspruch 2, **dadurch gekennzeichnet, daß** der Kopfabschnitt (4) eine untere Oberfläche (5) besitzt und daß die Mittel zum vertikalen Einstellen des Kopfabschnitts (4) ferner umfassen:
- eine vertikale Gewindebohrung (23) an der unteren Oberfläche (5) des Kopfabschnitts (4), die sich in den Kopfabschnitt (4) erstreckt; und
- ein mit Gewinde versehenes oberes Ende (25) des Teleskopauslegers (16), das in die vertikale Gewindebohrung (23) geschraubt ist.

4. Ergonomische Handauflage (1) nach Anspruch 2 oder 3, **dadurch gekennzeichnet, daß** sie ferner Mittel zum horizontalen Einstellen des Kopfabschnitts (4) in einem gewünschten Abstand vom Körper eines Benutzers umfaßt.

5. Ergonomische Handauflage (1) nach Anspruch 4, **dadurch gekennzeichnet, daß** die Mittel zum horizontalen Einstellen des Kopfabschnitts (4) umfassen:
- einen langgestreckten Kanal (42), der mit dem Basisabschnitt (14) verbunden ist, wobei der Kanal (42) eine obere Öffnung (46) besitzt;
- ein Gleitelement (48), das in der Öffnung (46) des Kanals (42) gleitend angebracht und mit dem Teleskopausleger (16) verbunden ist; und
- ein Verriegelungsmittel, das das Gleitelement (48) in einer gewünschten Position längs des Kanals (42) verriegelt.

6. Ergonomische Handauflage (1) nach einem der Ansprüche 2 bis 5, **dadurch gekennzeichnet, daß** der Basisabschnitt (14) eine von einem Rand (17) umgebene obere Oberfläche (15) besitzt, wobei die obere Oberfläche (15) und der Rand (17) als die Behältermittel wirken.

7. Ergonomische Handauflage (1) nach Anspruch 6, **dadurch gekennzeichnet, daß** der Rand (17) des Basisabschnitts (14) einen Magnetstreifen (21) enthält.

8. Ergonomische Handauflage (1) nach Anspruch 6 oder 7, **dadurch gekennzeichnet, daß** die obere Oberfläche (15) des Basisabschnitts (14) mit einem nach oben vorstehenden Werkzeughaltebehälter (22) versehen ist, der ein unteres Ende (24) besitzt, das offengelassen ist.

9. Ergonomische Handauflage (1) nach einem der Ansprüche 1 bis 8, **dadurch gekennzeichnet, daß** sie ferner eine Unterdruckvorrichtung umfaßt, die in der Nähe der Arbeitsoberfläche (12) einen Unterdruckeinlaß (26) besitzt.

10. Ergonomische Handauflage (1) nach Anspruch 5, **dadurch gekennzeichnet, daß** sie ferner eine Unterdruckvorrichtung umfaßt, die in der Nähe der Arbeitsoberfläche (12) einen Unterdruckeinlaß (26) besitzt, und daß:
- der Teleskopausleger (16) eine erste Leitung (45) definiert, die mit dem Unterdruckeinlaß (26) in Verbindung steht; und
- der langgestreckte Kanal (42), der an dem Basisabschnitt (14) angebracht ist, eine zweite Leitung (47) definiert, wovon ein Ende (52) mit dem Teleskopausleger (16) verbunden ist, so daß die zweite Leitung (47) mit der ersten Leitung (45) in Verbindung steht, und wovon ein gegenüberliegendes Ende (54) sich aus dem Basisabschnitt (14) hinaus erstreckt, um mit der Unterdruckvorrichtung verbunden werden zu können.

11. Ergonomische Handauflage (1) nach Anspruch 10, **dadurch gekennzeichnet, daß**:
- die Arbeitsoberfläche (12a) eben ist, aus Holz hergestellt ist und eine vorgegebene Form hat;
- die Arbeitsoberfläche (12a) auf der oberen Oberfläche (6) des Kopfabschnitts (4) abnehmbar angebracht ist;
- die obere Oberfläche (6) des Kopfabschnitts (4) mit einer Aussparung (34) zum Aussparen der Arbeitsoberfläche (12a) versehen ist, wobei die Aussparung (34) eine Form hat, die zu der vorgegebenen Form der Arbeitsoberfläche (12a) im wesentlichen komplementär ist, so daß die Arbeitsoberfläche (12a) eng in die Aussparung (34) eingepaßt werden kann; und
- die Aussparung (34) wenigstens eine seitliche Nut (36) aufweist, die dann, wenn die Arbeitsoberfläche (12a) in die Aussparung (34) eingesetzt ist, in der Nähe der Arbeitsoberfläche (12) einen Schlitz (38) definiert, der als der Unterdruckeinlaß (26) dient.

12. Ergonomische Handauflage (1) nach Anspruch 10, **dadurch gekennzeichnet, daß**:
- die Arbeitsoberfläche (12b) als Trichter geformt ist, der eine große Öffnung (28), die sich gegenüber dem Basisabschnitt (14) befindet, und eine kleine Öffnung (30), die als der Unterdruckeinlaß (26) dient, besitzt;
- eine vertikal vorstehende Abschirmung (32) auf der Arbeitsoberfläche (12b) vorgesehen ist, die wenigstens einen Teil der großen Öffnung (28) des Trichters umgibt;
- die Arbeitsoberfläche (12b) auf der oberen Oberfläche (6) des Kopfabschnitts (4) abnehmbar angebracht ist; und
- die obere Oberfläche (6) des Kopfabschnitts (4) mit einer Aussparung (34) versehen ist, die eine Form besitzt, die zu der vorgegebenen Form der Arbeitsoberfläche (12b) vollständig komplementär ist, so daß die Arbeitsoberfläche (12b) in die Aussparung (34) eng eingesetzt werden kann.

13. Ergonomische Handauflage (1) nach einem der Ansprüche 1 bis 12, **dadurch gekennzeichnet, daß** der Kopfabschnitt (4) ferner zwei ausgesparte Bereiche (58 und 58') umfaßt, die sich in der Nähe einer entsprechenden Handabschnittauflage (8 oder 8') bzw. in der Nähe der Arbeitsoberfläche (12) befindet.

14. Ergonomische Handauflage (1) nach einem der Ansprüche 1 bis 13, **dadurch gekennzeichnet, daß** der Kopfabschnitt (4) ferner eine Fingergreifstruktur (60) umfaßt, die sich teilweise längs der Arbeitsoberfläche (12) erstreckt.

15. Ergonomische Handauflage (1) nach einem der Ansprüche 1 bis 14, **dadurch gekennzeichnet, daß** sie ferner umfaßt:
- ein entnehmbares Vergrößerungsglas (62);
- einen einstellbaren Griff (64) zum Halten des Vergrößerungsglases (62) zwischen dem Stück (2), an dem die Präzisionsarbeit vorgenommen werden soll, und einem Auge eines Benutzers; und
- Mittel zum lösbaren Befestigen des Griffs (64) an der ergonomischen Handauflage (1).

16. Ergonomische Handauflage (1) nach einem der Ansprüche 1 bis 15, **dadurch gekennzeichnet, daß** sie ferner umfaßt:
- ein entnehmbares Augenschutzglas (62);
- einen einstellbaren Griff (64) zum Halten des Augenschutzglases (62) zwischen dem Stück (2), an dem die Präzisionsarbeit vorgenommen werden soll, und einem Auge eines Benutzers; und
- Mittel zum lösbaren Befestigen des Griffs (64) an der ergonomischen Handauflage (1).

17. Ergonomische Handauflage (1) nach den Ansprüchen 6, 7 oder 8, **dadurch gekennzeichnet, daß** die obere Oberfläche (15) des Basisabschnitts (14) ein rutschfestes Abdeckmaterial mit einer vorgegebenen Farbe aufweist, die zu einer Farbe des Stücks (2), an dem die Präzisionsarbeit vorgenommen werden soll, in Kontrast steht, und wobei die obere Oberfläche (6) des Kopfabschnitts (4) ebenfalls eine Farbe besitzt, die zu der Farbe des Stücks (2), an dem die Präzisionsarbeit vorgenommen werden soll, in Kontrast steht.

## Revendications

1. Support de main ergonomique (1) pour travail de précision sur une pièce (2), du type comprenant :
- une partie de tête (4) comportant une surface supérieure (6), la surface supérieure (6) présentant une surface de travail (12);
- des moyens servant à régler verticalement la partie de tête (4) à une hauteur désirée ;
**caractérisé en ce que** :
- la surface supérieure (6) de la partie de tête (4) est de forme sensiblement hémisphérique et comporte deux supports de partie de main (8 et 8') conformés de façon à soutenir des parties proéminentes de la paume des mains d'un utilisateur, lesdits supports de partie de main (8 et 8') étant respectivement situés sur deux côtés opposés de la surface supérieure (6) et au voisinage de la surface de travail (12); et
- des moyens formant réceptacle sont prévus au-dessous d'au moins la surface de travail (12) pour recueillir la pièce (2) ou tout instrument éventuel qui pourrait tomber de la surface de travail (12).

2. Support de main ergonomique (1) tel que revendiqué à la revendication 1, **caractérisé en ce qu'**il comprend en outre une partie de base (14) et **en ce que** les moyens servant à régler verticalement la partie de tête (4) comprennent :
- une colonnette télescopique (16) s'étendant verticalement entre la partie de tête (4) et la partie de base (14) ; et
- un moyen de blocage servant à bloquer ladite colonnette télescopique (16) dans une position désirée correspondant à la hauteur désirée de la partie de tête (4).

3. Support de main ergonomique (1) tel que revendiqué à la revendication 2, **caractérisé en ce que** la partie de tête (4) présente une surface inférieure (5) et **en ce que** les moyens servant à régler verticalement la partie de tête (4) comprennent en outre
- un trou fileté vertical (23) situé à l'endroit de la surface inférieure (5) de la partie de tête (4) et s'étendant à l'intérieur de la partie de tête (4); et
- une extrémité supérieure filetée (25) de la colonnette télescopique (16) se vissant dans le trou fileté vertical (23).

4. Support de main ergonomique (1) tel que revendiqué à la revendication 2 ou 3, **caractérisé en ce qu'**il comprend en outre des moyens servant à régler horizontalement la partie de tête (4) jusqu'à une distance désirée à partir du corps d'un utilisateur :

5. Support de main ergonomique (1) tel que revendiqué à la revendication 4, **caractérisé en ce que** les moyens servant à régler horizontalement la partie de tête (4) comprennent :
- une goulotte allongée (42) relié à la partie de base (14), la goulotte (42) présentant une ouverture supérieure (46) ;
- un élément coulissant (48) monté d'une manière coulissante dans l'ouverture (46) de la goulotte (42), l'élément coulissant (48) étant relié à la colonnette télescopique (16); et
- un moyen de blocage servant à bloquer ledit élément coulissant (48) dans une position désirée le long de ladite goulotte (42).

6. Support de main ergonomique (1) tel que revendiqué dans une quelconque des revendications 2 à 5, **caractérisé en ce que** la partie de base (14) présente une surface supérieure (15) entourée d'un rebord (17) et dans lequel lesdits surface supérieure (15) et bord (17) jouent le rôle desdits moyens formant réceptacle.

7. Support de main ergonomique (1) tel que revendiqué à la revendication 6, **caractérisé en ce que** le rebord (17) de la partie de base (14) comporte une bande magnétique (21).

8. Support de main ergonomique (1) tel que revendiqué à la revendication 6 ou 7, **caractérisé en ce que** la surface supérieure (15) de la partie de base (14) est pourvue d'un réceptacle de réception d'instrument (22) qui fait saillie vers le haut et présente une extrémité inférieure (24) qui reste ouverte.

9. Support de main ergonomique (1) tel que revendiqué dans une quelconque des revendications 1 à 8, **caractérisé en ce qu'**il comprend en outre un dispositif de vide comportant un orifice d'entrée de vide (26) adjacent à la surface de travail (12).

10. Support de main ergonomique (1) tel que revendiqué à la revendication 5, **caractérisé en ce qu'**il comprend en outre un dispositif de vide comportant un orifice d'entrée de vide (26) adjacent à la surface de travail (12) et **en ce que** :
- la colonnette télescopique (16) définit un premier conduit (45) qui communique avec l'orifice d'entrée de vide (26); et
- la goulotte allongée (42) montée sur la partie de base (14) définit un second conduit (47) présentant une extrémité (52) reliée à la colonnette télescopique (16) de façon que le second conduit (47) communique avec le premier conduit (45), et une extrémité opposée (54) s'étendant à l'extérieur de la partie de base (14) en vue d'une connexion au dispositif de vide.

11. Support de main ergonomique (1) tel que revendiqué à la revendication 10, **caractérisé en ce que** :
- la surface de travail (12a) est plate, réalisée en bois et d'une forme préfixée ;
- ladite surface de travail (12a) est montée d'une manière amovible sur la surface supérieure (6) de la partie de tête (4) ;
- la surface supérieure (6) de la partie de tête (4) est pourvue d'une partie en retrait (34) servant à mettre en retrait ladite surface de travail (12a), ladite partie en retrait (34) ayant une forme sensiblement complémentaire de la forme préfixée de la surface de travail (12a) de façon que ladite surface de travail (12a) puisse s'emboîter étroitement dans ladite partie en retrait (34); et
- ladite partie en retrait (34) comporte au moins une entaille latérale (36) qui, lorsque la surface de travail (12a) est emboîtée dans la partie en retrait (34), définit une fente (38) adjacente à ladite surface de travail (12), ladite fente (38) jouant le rôle dudit orifice d'entrée de vide (26).

12. Support de main ergonomique (1) tel que revendiqué à la revendication 10, **caractérisé en ce que** :
- la surface de travail (12b) est en forme d'entonnoir, ledit entonnoir présentant une grande ouverture (28) qui est située à l'opposé de la partie de base (14) et une petite ouverture (30) qui joue le rôle dudit orifice d'entrée de vide (26);
- un écran verticalement en saillie (32) est prévu sur la surface de travail (12b), ledit écran (32) entourant au moins une partie de la grande ouverture (28) de l'entonnoir ;
- ladite surface de travail (12b) est montée d'une manière amovible sur la surface supérieure (6) de la partie de tête (4); et
- la surface supérieure (6) de la partie de tête (4) est pourvue d'une partie en retrait (34) ayant une forme entièrement complémentaire de la forme préfixée de la surface de travail (12b) de façon que ladite surface de travail (12b) puisse s'emboîter étroitement dans ladite partie en retrait (34).

13. Support de main ergonomique (1) tel que revendiqué dans une quelconque des revendications 1 à 12, **caractérisé en ce que** la partie de tête (4) comprend en outre deux zones en retrait (58 et 58'), chaque zone en retrait (58 ou 58') étant respectivement au voisinage d'un support de partie de main correspondant (8 ou 8') et de la surface de travail (12).

14. Support de main ergonomique (1) tel que revendiqué dans une quelconque des revendications 1 à 13, **caractérisé en ce que** la partie de tête (4) comprend en outre une structure de prise de doigt (60) s'étendant partiellement le long de la surface de travail (12).

15. Support de main ergonomique (1) tel que revendiqué dans une quelconque des revendications 1 à 14, **caractérisé en ce qu'**il comprend en outre :
- un verre grossissant (62) escamotable ;
- une poignée réglable (64) servant à maintenir ledit verre grossissant (62) entre la pièce (2) sur laquelle le travail de précision doit être effectué et l'oeil d'un utilisateur ; et
- des moyens servant à fixer d'une manière séparable ladite poignée (64) audit support de main ergonomique (1).

16. Support de main ergonomique (1) tel que revendiqué dans une quelconque des revendications 1 à 15, **caractérisé en ce qu'**il comprend en outre :
- un verre de protection oculaire (62) escamotable ;
- une poignée réglable (64) servant à maintenir ledit verre de protection oculaire (62) entre la pièce (2) sur laquelle le travail de précision doit être effectué et l'oeil d'un utilisateur ; et
- des moyens servant à fixer d'une manière séparable ladite poignée (64) audit support de main ergonomique (1).

17. Support de main ergonomique (1) tel que revendiqué aux revendications 6, 7 ou 8, **caractérisé en ce que** la surface supérieure (15) de la partie de base (14) comprend une matière de recouvrement anti-glissement ayant une couleur préfixée qui fait contraste avec une couleur de la pièce (2) sur laquelle le travail de précision doit être effectué, et dans lequel la surface supérieure (6) de la partie de tête (4) a aussi une couleur qui fait contraste avec la couleur de la pièce (2) sur laquelle le travail de précision doit être effectué.
